# EUROPEAN PATENT SPECIFICATION

(11) **EP 2 357 764 B1**
(45) Date of publication and mention of the grant of the patent: **23.08.2017**
(21) Application number: 11151784.3
(22) Date of filing: 24.01.2011
(51) Int. Cl.: H04L 12/70

(54) **TRAFFIC SHAPING SCHEDULING METHOD, TRAFFIC SHAPING SCHEDULING APPARATUS, AND ROUTING DEVICE**
VERKEHRSFORMUNGSPLANNUNGSVERFAHREN, VERKEHRSFORMUNGSPLANNUNGSVORRICHTUNG UND ROUTING-VORRICHTUNG
PROCÉDÉ DE PROGRAMMATION DE LISSAGE DE TRAFIC, APPAREIL DE PROGRAMMATION DE LISSAGE DE TRAFIC ET DISPOSITIF D'ACHEMINEMENT

(30) Priority: 09.02.2010 CN 201010109580
(43) Date of publication of application: 17.08.2011
(73) Proprietor: Huawei Technologies Co., Ltd., Longgang District Shenzhen, Guangdong 518129 (CN)
(72) Inventor: Sun, Qingxia, 518129, Shenzhen Guangdong (CN); Bian, Yunfeng, 518129, Shenzhen Guangdong (CN)
(74) Representative: Isarpatent

(56) References cited:
- HUAWEI TECHNOLOGIES CO ET AL: "Quidway NetEngine5000E/80E/40E Router V200R003C02&V300R005C01&V300R0 03C02 Feature Description - QoS", 20091011, [Online] no. 3, 11 October 2009 (2009-10-11), pages 1-144, XP007918155, Retrieved from the Internet: URL:http://support.huawei.com/support/page s/kbcenter/view/product.do?actionFlag=sear chManualContents&web_doc_id=SE0000350447&m aterial_type=ProductManual&part_no=10132> [retrieved on 2011-04-08]

## Description

### FIELD OF THE INVENTION

The present invention relates to the field of communications technologies, and in particular, to a traffic shaping scheduling method, a traffic shaping scheduling apparatus, and a routing device.

### BACKGROUND OF THE INVENTION

With popularization of Internet and development of data communications technologies, a great deal of data is transmitted in communication networks all the time. In order to satisfy network Quality of Service (QoS) customized by subscribers, the sending of the data transmitted in the network needs to be controlled, so as to implement different levels of services corresponding to different subscribers. One of key technologies to implement such services is traffic shaping. A traffic shaping scheduling method is a method for controlling traffic entering a network in a certain period of time, so as to transform the traffic into an expected form for the convenience of transmission. The traffic shaping shapes the subscriber's traffic being irregular or failing to satisfy a preset traffic feature, and makes the subscriber's traffic be smoother, so as to facilitate bandwidth matching between the upstream and downstream of the network.

The common traffic shaping scheduling method in the prior art for limiting the traffic of a subscriber group is a Subscriber Group Queue shaping (GQ shaping) method. This method enables the traffic to match a customized bandwidth service. A basic principle of the method is to divide all Subscriber Queues (SQs) into multiple Group Queues (GQs) according to the dividing of areas or other reference factors, in which each GQ includes multiple SQs. A token bucket is set for each GQ, representing the bandwidth traffic that the GQ allows to pass. Through the control over the number of the tokens in the token bucket in each GQ, the bandwidth traffic corresponding to the GQ is limited, so as to limit the total traffic of all the SQs in the GQ. Therefore, in a GQ subscriber group, when the traffic consumed by a part of SQs is less, the traffic distributed by the GQ to the remaining SQs may be increased, so that the bandwidth of the network is fully utilized.

However, the traffic shaping scheduling method has some drawbacks. The GQ shaping method only effectively limits the total traffic of the subscriber group by using GQ as a unit, without considering the traffic consumed by each service corresponding to each subscriber. When the traffic of a single service or a single type of the service of a subscriber or such traffic of multiple subscribers in a GQ is particularly large, and occupies high bandwidth, because the total traffic of the GQ is limited, the traffic of other services of the subscriber or other scribers in the GQ will be blocked, and a good bandwidth service is unavailable. Therefore, although the GQ shaping solution of the prior art controls the total traffic of multiple SQs from the perspective of the GQ, it may lead to the blockage of the single service of the subscriber.

In the paper of HUAWEI TECHNOLOGIES CO ET AL: "Quidway NetEngine5000E/80E/40E Route V200R003C02&V300R005C01&V300R0 03C02 Feature Description -QoS", 20091011, [Online], there is disclosed a method for HQoS implementation on a CPOS or E3/T3 interface.

### SUMMARY OF THE INVENTION

The embodiments of the present invention provide a traffic shaping scheduling method, a traffic shaping scheduling apparatus, and a routing device, for reasonably limiting service traffic of a subscriber by using service as a unit.

An embodiment of the present invention provides a traffic shaping scheduling method for controlling traffic entering a network in a certain period of time. The method includes:
distributing to each subscriber a unique Subscriber Queue identifier, SQID, and making it correspond to a Subscriber Queue, SQ, wherein multiple Flow Queues, FQs, corresponding to multiple services of each SQ are separately configured to different Flow Group Queues, FGQs;
storing in a storage list a scheduling result of a previous level scheduling;
obtaining, by a query module, a SQID of a SQ passing the previous-level scheduling, and capable of entering a present-level scheduling, said present-level scheduling comprising:
   querying, by said query module all FGQ, identifiers, FGQID, corresponding or relevant to the SQID, wherein each FGQID corresponds to one FGQ;
   wherein a token bucket corresponding to each FGQID is for limiting data traffic allowed to enter the network corresponding to the FGQ, and
   the number of currently remaining tokens in a token bucket of the FGQ represents the data traffic of the FGQ currently allowed to be transmitted;
   reading the number of the currently remaining tokens in the token bucket respectively corresponding to each queried FGQID; and
   judging, by a judgement module, if the number of the currently remaining tokens of the FGQID is greater than or equal to a preset threshold of the FGQID, determining that the FQ corresponding to the FGQID in the SQ satisfies a scheduling condition, and if the number of the currently remaining tokens of the FGQID is smaller than the preset threshold of the FGQID, determining that the FQ corresponding to the FGQID in the SQ fails to satisfy the scheduling condition, and
   scheduling the FQ, satisfying the scheduling condition out of the queue.

An embodiment of the present invention also provides a traffic shaping scheduling apparatus for controlling traffic entering a network in a certain period of time, wherein a unique Subscriber Queue identifier, SQID, is distributed to each subscriber, and the SQID is made correspond to a Subscriber Queue, SQ, wherein multiple Flow Queues, FQs, corresponding to multiple services of each SQ are separately configured to different Flow Group Queues, FGQs, and a scheduling result of a previous level scheduling is stored in a storage list. The apparatus includes:
a query module, adapted to obtain a SQID of a SQ, passing the previous-level scheduling and capable of entering a present level scheduling, and the query module is adapted to query all Flow Group Queue, FGQ, identifiers, FGQID, corresponding or relevant to the SQID for said present-level scheduling, wherein each FGQID corresponds to one FGQ, wherein a token bucket corresponding to each FGQID is for limiting data traffic allowed to enter the network corresponding to the FGQ, and the number of currently remaining tokens in a token bucket of the FGQ represents the data traffic of the FGQ currently allowed to be transmitted;
a judgement module, adapted to judge if the number of the currently remaining tokens of the FGQID is greater than or equal to a preset threshold of the FGQID, wherein the judgement module further comprising:
   a reading module, adapted to read the number of currently remaining tokens in the token bucket respectively corresponding to each queried FGQID; and
   a determination module, adapted to determine that the FQ corresponding to the FGQID in the SQ satisfies the scheduling condition, if the number of the currently remaining tokens of the FGQID is greater than or equal to a preset threshold of the FGQID, and determine that the FQ corresponding to the FGQID in the SQ fails to satisfy the scheduling condition, if the number of the currently remaining tokens of the FGQID is smaller than the preset threshold of the FGQID ; and
   a scheduling module, adapted to schedule the FQ, satisfying the scheduling condition determined by the judgement module out of the queue.

An embodiment of the present invention further provides a routing device, including the traffic shaping scheduling apparatus.

It can be seen that, in the traffic shaping scheduling method, the traffic shaping scheduling apparatus, and the routing device according to the embodiments of the present invention, the traffic of each FQ corresponding to each service is limited based on a precondition that each FQ corresponding to each service of the SQ is separately configured to a corresponding FGQ, so that bandwidth traffic occupied by each service is limited, thus preventing a situation that other services of the subscriber or other subscribers are blocked due to the excessively large traffic of the single service of the subscriber.

### BRIEF DESCRIPTION OF THE DRAWINGS

To illustrate the technical solutions according to the embodiments of the present invention or in the prior art more clearly, the accompanying drawings for describing the embodiments or the prior art are provided briefly below. Apparently, the accompanying drawings in the following description are only some embodiments of the present invention, and persons of ordinary skill in the art can derive other drawings from the accompanying drawings without creative efforts.
FIG. 1 is a schematic flow chart of a traffic shaping scheduling method according to an embodiment of the present invention;
FIG. 2 is a schematic flow chart of another traffic shaping scheduling method according to an embodiment of the present invention;
FIG. 3 is a schematic diagram of a second correspondence list according to an embodiment of the present invention;
FIG. 4 is a schematic structural view of a traffic shaping scheduling apparatus according to an embodiment of the present invention;
FIG. 5 is a schematic structural view of another traffic shaping scheduling apparatus according to an embodiment of the present invention; and
FIG. 6 is a schematic structural view of a routing device according to an embodiment of the present invention.

### DETAILED DESCRIPTION OF THE EMBODIMENTS

The technical solutions of the present invention are clearly and fully described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

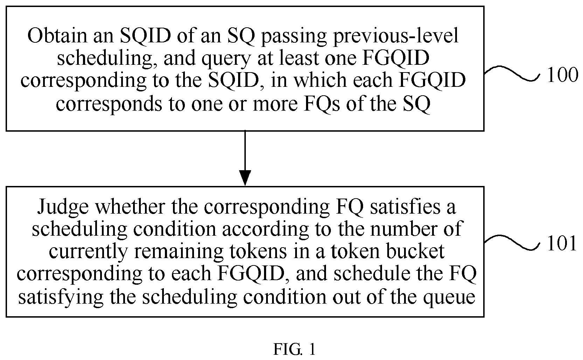

FIG. 1 is a flow chart of a traffic shaping scheduling method according to an embodiment of the present invention. As shown in FIG. 1, the method according to this embodiment may include the following steps:
Step 100: Obtain an SQID of an SQ passing previous-level scheduling, and query at least one FGQID corresponding to the SQID, in which each FGQID corresponds to one or more FQs of the SQ.

In order to ensure QoS of a broadband service of a subscriber and enable the subscriber to obtain the broadband service corresponding to a service level customized by the subscriber, when the broadband service is provided for various network services of the subscriber, the subscriber's traffic entering the network is usually reasonably controlled through a series of traffic shaping and scheduling methods.

In the traffic shaping scheduling method according to the embodiment of the present invention, an FQ corresponding to a single service is used as a unit. Specifically, in the embodiment of the present invention, according to different services, multiple FQs corresponding to multiple services of each SQ are separately configured to different FGQs, and a token bucket is correspondingly configured to each FGQ for limiting data traffic allowed to enter the network corresponding to the FGQ.

The configuration and the division of the FGQ is irrelevant to the GQ corresponding to the original multiple SQs, and is relevant to the services of the subscriber, that is, the SQs corresponding to each FGQ may belong to the same GQ, or belong to different GQs, and the specific configuration may be determined according to the actual situation or the demand of the subscriber. In addition, for an FGQ, the services distributed thereof, that is, one or more FQ may be distributed to the FGQ, for example, FQs of two services with small traffic consumption may be configured to one FGQ, or the FQs of the services with lower priority level, such as the FQs of all BE services, may be configured to one FGQ, and the specific configuration is still determined according to the actual situation and the demand of the subscriber. In the embodiment of the present invention, the specific manner of distributing FQs of the corresponding subscribers to each FGQ is not limited.

For an SQ, the multiple FQs corresponding to the SQ may belong to different FGQs corresponding to different services, therefore, through the control over the traffic of any one of the FGQs, the traffic occupied by one or more services corresponding to the FGQ may be controlled accordingly, thereby preventing a situation that other services of the subscriber or other subscribers are blocked due to the excessively large traffic of a single service of the subscriber.

Specifically, in this embodiment, after previous-level scheduling (such as a GQ shaping) ends, a scheduling apparatus reads the SQID corresponding to the SQ passing the previous-level scheduling from a storage list storing a scheduling result of the previous-level scheduling. The SQID here is a unique ID distributed by a system to each subscriber and corresponding to the SQ, and the SQID read by the scheduling apparatus at the moment is an ID corresponding to the SQ passing the previous-level scheduling and capable of entering a present level scheduling. After reading the corresponding SQID, the scheduling apparatus queries all FGQIDs corresponding or relevant to the SQID. Specifically, the querying all FGQIDs corresponding to the SQID may be understood as querying all the FGQIDs corresponding to the FQs in the SQ corresponding to the SQID. It should be noted that the multiple FQs in the SQ corresponding to the SQID may correspond to the same FGQID, or may separately correspond to different FGQIDs.

Because one SQ may correspond to multiple services, that is, multiple FQs, and each FQ may be configured to one FGQ of the corresponding service, there may also be multiple FGQIDs corresponding to the SQID queried and read by the scheduling apparatus at the moment. In this embodiment, according to the actual application situation, each SQ usually has 8 FQs at the utmost, that is, one SQID usually may correspond to 8 different services at the utmost. Therefore, in this step, the number of the queried FGQIDs corresponding to the SQID may be 8 at the utmost, that is, if multiple FQs in the SQ corresponding to the SQID correspond to the same FGQID, the number of the queried FGQIDs corresponding to the SQID is less than 8; and if each FQ in the SQ corresponding to the SQID corresponds to different FGQIDs, the number of the queried FGQIDs corresponding to the SQID is 8.

Step 101: Judge whether the corresponding FQ satisfies a scheduling condition according to the number of currently remaining tokens in a token bucket corresponding to each FGQID, and schedule the FQ satisfying the scheduling condition out of the queue.

After querying each FGQID corresponding to the SQID, in order to correspondingly control the traffic of each service of the subscriber corresponding to each FGQID, the scheduling apparatus judges whether one or more FQs corresponding to each FGQID satisfy the scheduling condition of the present level scheduling, that is, whether one or more FQs corresponding to each FGQID can pass the present level scheduling and enter next-level scheduling, according to the number of the currently remaining tokens in the token bucket corresponding to each FGQID. Specifically, for an FGQ corresponding to the FGQID, the number of the currently remaining tokens in the token bucket of the FGQ represents the data traffic of the FGQ currently allowed to be transmitted, that is, represents a bandwidth ability that may be borne by one or more services corresponding to the FGQ. Therefore, the scheduling apparatus may judge whether the FQ corresponding to the FGQID can be scheduled out of the queue in the present scheduling according to the number of the remaining tokens in the token bucket corresponding to each FGQID. The apparatus device correspondingly schedules the FQ satisfying the scheduling condition out of the queue according to the judged result, so as to enable the FQ scheduled out of the queue to join the next-level scheduling. On the contrary, the scheduling device does not schedule the FQ failing to satisfy the scheduling condition out of the queue, and the FQ will not join the next-level scheduling.

It should be noted that, in the actual application, the traffic shaping scheduling method according to the embodiment of the present invention and the GQ shaping method in the prior art may be combined, so that the total traffic of the subscriber group and the traffic of each service may be controlled. The FGQ shaping method according to the embodiment of the present invention may be performed before the GQ shaping or performed after the GQ shaping. During the entire traffic shaping and queue scheduling process, the GQ shaping may act as the previous-level scheduling or next-level scheduling of the traffic shaping scheduling according to the embodiment of the present invention. Optimally, the GQ shaping may act as the previous-level scheduling of the traffic shaping scheduling of this embodiment, it is judged whether each SQ can pass the GQ shaping, the SQ that cannot pass the GQ shaping is filtered out, and then the FGQ shaping according to the embodiment of the present invention is performed, so that the resources consumed by the entire shaping scheduling are greatly reduced, which is an optimal shaping scheduling means. It can be seen that, in the traffic shaping scheduling method according to this embodiment, the traffic of each FGQ corresponding to each service is limited based on the precondition that each FQ corresponding to each service of the SQ is respectively configured to the corresponding FGQ, the bandwidth traffic occupied by each service is limited, thus preventing the situation that other services of the subscriber or other subscribers are blocked due to the excessively large traffic of the single service of the subscriber.

Further, in the traffic shaping scheduling method according to this embodiment, different services of a subscriber may be divided into different groups, so that services with large traffic do not affect the use of other services of the subscriber; and the same service of different subscribers may be divided into one group to limit the traffic thereof, so that the total bandwidth of the service used by the different subscribers is always limited, thereby ensuring that the service does not block other services of other subscribers.

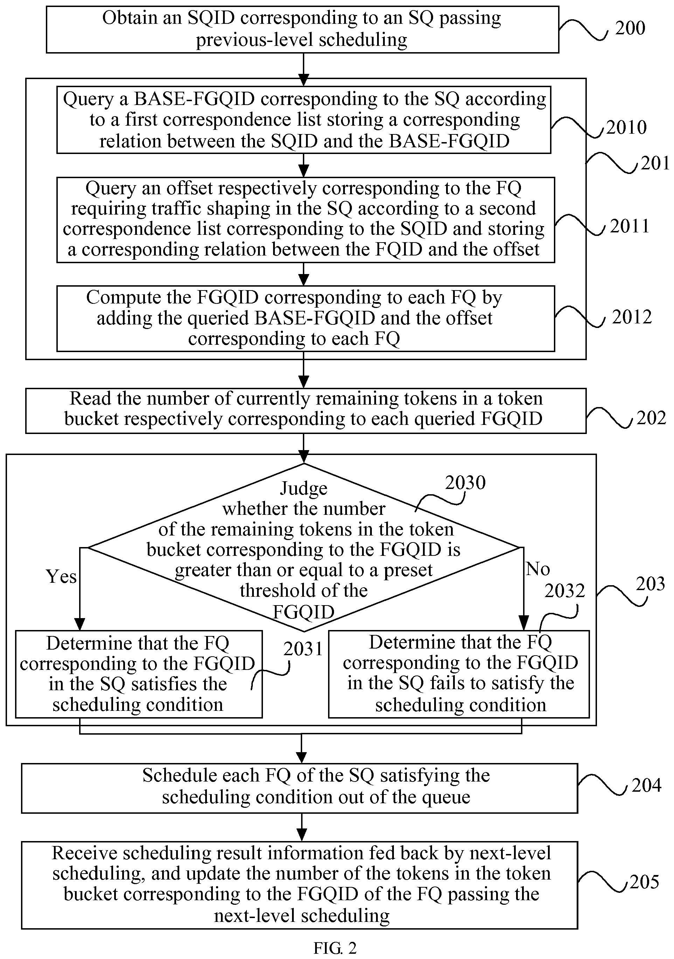

FIG. 2 is a flow chart of a second embodiment of a traffic shaping scheduling method according to the present invention. As shown in FIG. 2, the method of the embodiment may include the following steps:
Step 200: Obtain an SQID corresponding to an SQ passing previous-level scheduling.
   In this embodiment, the previous scheduling being a GQ shaping is taken as an example for description. In step 200, the SQID read by a traffic shaping scheduling apparatus is the ID corresponding to the SQ scheduled out of the queue in the previous level GQ shaping scheduling.
Step 201: Query at least one FGQID corresponding to the obtained SQID.

After reading the SQID passing the previous-level scheduling, the traffic shaping scheduling apparatus queries each FGQID corresponding to the SQID in configuration information thereof, so as to control the traffic of each service of the subscriber corresponding to each queried FGQID, in which the FGQID corresponds to one or more FQs of the SQ, that is, corresponds to one or more services of the subscriber.

Specifically, the querying each FGQID corresponding to the SQID may be understood as querying the FGQIDs corresponding to the IDs of the FQs in the SQ corresponding to the SQID. It should be noted that multiple FQs in the SQ corresponding to the SQID may correspond to the same FGQID, or may respectively correspond to different FGQIDs.

Specifically, in this embodiment, step 210 may also include the following sub-steps:
Step 2010: Query a base of flow group queue identifier (BASE_FGQID) corresponding to the SQ according to a first correspondence list storing a mapping relationship between the SQID and the BASE_FGQID.
Step 2011: Query respective offsets of the FQs requiring traffic shaping in the SQ respective offsets of the FQs requiring traffic shaping in the SQ according to a second correspondence list corresponding to the SQID and storing a mapping relationship between an FQID and the offset.
Step 2012: Compute the FGQID corresponding to each FQ by adding the queried BASE-FGQID and the offset corresponding to each FQ.

In order to query the FGQID corresponding to the read SQID, in this embodiment, the traffic shaping scheduling apparatus queries the BASE_FGQID of the SQ corresponding to the SQID from the first correspondence list storing the mapping relationship between each SQID and the BASE_FGQID. The traffic shaping scheduling apparatus queries each offset corresponding to each FQ requiring the present traffic shaping in the SQ from the second correspondence list storing the mapping relationship between each FQID in the SQ and the offset. The traffic shaping scheduling apparatus may compute each FGQID corresponding to each FQ according to the queried BASE_FGQID corresponding to the SQ, and each offset respectively corresponding to each FQ of the SQ.

Specifically, because each SQ corresponds to multiple services of the user, that is, corresponds to multiple FQs, if in the correspondence list, each FQ corresponding to each SQ and each FGQID respectively corresponding to each FQ are stored in a one-to-one correspondence mode, many storage resources are consumed due to the excessively large bit data amount of the FGQID. Therefore, in this embodiment, a base value of the FGQID being BASE_FGQID is correspondingly configured for the SQID of each subscriber, in which each SQID corresponds to a BASE_FGQID in a one-to-one mode, which is stored in the first correspondence list. Based on the BASE_FGQID corresponding to the SQID, the FGQID of each FQ of the SQ may be computed by using the BASE_FGQID and the certain offset. In this embodiment, the mapping relationship between the offset of the FGQID corresponding to each FQ of each SQ based on the BASE_FGQID and the FQ is stored in a second correspondence list. Further, it is identified whether each FQ requires the present traffic shaping scheduling in the second correspondence list.

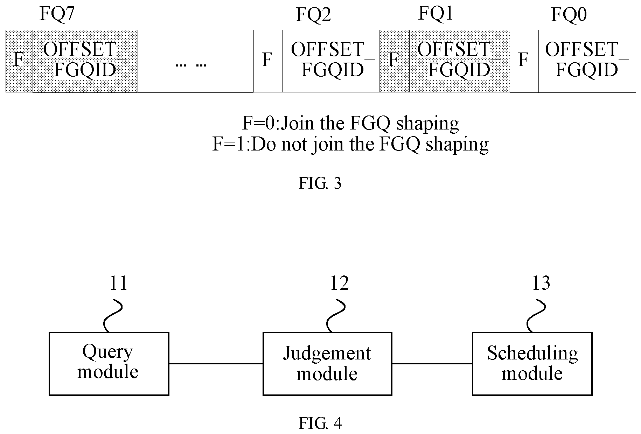

Referring to FIG. 3, it is a schematic diagram of the second correspondence list according to an embodiment of the present invention. In the second correspondence list shown in FIG. 3, one SQ corresponding to 8 FQs (FQ0 to FQ7) is taken as an example for description. As shown in FIG. 3, an ID bit F of 1 bit is distributed to each FQ in the second correspondence list for identifying whether the FQ requires the present traffic shaping scheduling. In addition, a storage space of 3 bits is distributed to each FQ for correspondingly storing the offset of the FQ being OFFSET_FGQID. Therefore, when the ID bit F identifies that the FQ requires joining the present traffic shaping scheduling, through querying the offset corresponding to the FQ being OFFSET_FGQID, the traffic shaping apparatus may compute the FGQID according to the FQ according to the BASE_FGQID queried in the first correspondence list and the offset. Thus, the traffic shaping apparatus may query the FGQIDs respectively corresponding to all the FQs requiring the traffic shaping according to the first correspondence list and the second correspondence list.

Specifically, in this embodiment, the specific computing process of obtaining the FGQID of each FQ according to the BASE_FGQID and each offset may be based on addition, subtracting, or other rules of operation, and the specific settings may be subject to the actual situations, and is not limited to the embodiment of the present invention.

In the following, the SQID of an order of magnitude being 16 K and the FGQID of an order of magnitude being 16 K are respectively taken as an example to describe the storage resources occupied by the first correspondence list and the second correspondence list. All the FGQID are of the order of magnitude being 16 K, so that the FGQID is represented by the data of 14 bits, thus, for the SQID of the order of magnitude being 16 K, a first correspondence list with a depth being 16 K and a width being 14 bits is required to map the mapping relationships between all the SQIDs and the BASE_FGQIDs. Moreover, for each SQ, each FQ of the SQ further requires data of 3 bits to represent the offset corresponding to the FQ, and requires data of 1 bit to represent whether the FQ requires joining the FGQ shaping of this embodiment. Therefore, taking each SQ corresponding to 8 FQs as an example, each SQ further requires a second correspondence list of 32 bits to map the mapping relationships between all the FQs of the SQ and the offsets. For each SQ, the mapping relationship between the FQ and the offset configured by the system may be the same, so the SQs with the same mapping relationship may use the same second correspondence list template, so as to reduce the consumed storage resources.

Step 202: Read the number of currently remaining tokens in a token bucket respectively corresponding to each queried FGQID.

After querying each FGQID corresponding to the SQID, the traffic shaping scheduling apparatus judges whether each FQ of the SQ corresponding to each FGQID can pass the present level scheduling and enter next-level scheduling. Specifically, the judging process of the traffic shaping scheduling apparatus is performed through a token bucket traffic control method. Therefore, the traffic shaping scheduling apparatus firstly reads the number of the remaining tokens in the token bucket corresponding to each FGQID according to each queried FGQID, so as to judge whether one or more FQs of the SQ corresponding to the FGQID satisfy a present scheduling condition according to the number of the remaining tokens.

Step 203: Judge whether the corresponding FQ satisfies a scheduling condition according to the number of the currently remaining tokens in the token bucket corresponding to each read FGQID.

After reading the number of the tokens respectively corresponding to each FGQID, the traffic shaping scheduling apparatus judges whether one or more FQs respectively corresponding to the FGQID can pass the present scheduling according to the read result. Specifically, in this embodiment, the judging process of the traffic shaping scheduling apparatus may include the following sub-steps:
Step 2030: Judge whether the number of the remaining tokens in the token bucket corresponding to each FGQID is greater than or equal to a preset threshold of the FGQID, and if yes, Step 2031 is performed, otherwise, Step 2032 is performed.
Step 2031: Determine that the FQ corresponding to the FGQID in the SQ satisfies the scheduling condition, and perform step 204.
Step 2032: Determine that the FQ corresponding to the FGQID in the SQ fails to satisfy the scheduling condition, and perform step 204.

The traffic shaping scheduling apparatus judges whether the read number of the remaining tokens of each FGQID corresponding to the SQID is greater than or equal to the preset threshold of the FGQ, in which the preset threshold here is set for the service corresponding to the FGQ, and is a minimum service traffic at least saved for the token bucket of the FGQ during the corresponding service process. Therefore, if the traffic shaping scheduling apparatus obtains a result through judgement that the number of the remaining tokens in the token bucket of the FGQ is greater than or equal to the preset threshold, the traffic shaping scheduling apparatus determines that the FQ corresponding to the FGQID in the SQ satisfies the scheduling condition of the present level scheduling, and can pass the present level scheduling and enter the next-level scheduling or the data is transmitted. On the contrary, if the traffic shaping scheduling apparatus obtains the result through judgement that the number of the remaining tokens in the token bucket of the FGQ is smaller than the preset threshold, the traffic shaping scheduling apparatus determines that the FQ corresponding to the FGQID in the SQ fails to satisfy the scheduling condition of the present level scheduling, and cannot pass the present level scheduling.

Step 204: Schedule each FQ of the SQ satisfying the scheduling condition out of the queue.

The traffic shaping scheduling apparatus correspondingly sets the scheduling of the FQ satisfying the scheduling condition through the ID, and schedules the FQ out of the queue. The FQs will enter the next-level scheduling or the data is transmitted directly, while the FQs failing to satisfy the scheduling condition will be filtered out in the present scheduling, and will not join the next-level scheduling or be discarded.

Step 205: Update the number of the tokens in the token bucket corresponding to the FGQID of the FQ passing the next-level scheduling according to scheduling result information fed back by the next-level scheduling.

The traffic shaping scheduling apparatus schedules the FQs satisfying the present level scheduling condition out of the queue, so that the FQs enter the next-level scheduling, and after the next-level scheduling is completed, the scheduling result information of the next-level scheduling is fed back to the traffic shaping scheduling apparatus of the present level scheduling. The scheduling result information indicates all the FQs passing the next-level scheduling during the next-level scheduling process. After receiving the scheduling result information, the traffic shaping apparatus updates the number of the tokens in the token bucket of the FGQID corresponding to the FQ according to all the FQs passing the next-level scheduling indicated in the scheduling result information, through subtracting the corresponding number of the tokens in the corresponding token bucket to represent that some tokens have been consumed because the FQ is scheduled out of the queue, so that the number of the tokens in the token bucket corresponding to the FGQID satisfies the actual scheduling. For the FQ not passing the next-level scheduling, even though the FQ satisfies the scheduling condition of the present level scheduling and is scheduled out of the queue in the present level scheduling, because the FQ fails to pass the next-level scheduling, the traffic shaping scheduling apparatus will not update the number of the tokens in the token buckets corresponding to the FGQID of the FQ not passing the next-level scheduling.

It should be noted that in the method according to this embodiment, for the number of the tokens in the token bucket corresponding to each FGQ, the traffic shaping scheduling apparatus further performs a backfilling of the tokens in the token bucket corresponding to the FGQID according to configuration information corresponding to the FGQID of each FGQ. Specifically, the configuration information includes first configuration information and second configuration information, in which the first configuration information specifies a time interval between two neighboring times of backfilling of the tokens, and the second configuration information specifies the number of the tokens of each time of backfilling. The traffic shaping scheduling apparatus regularly backfills the token bucket corresponding to the FGQID with the tokens having the number corresponding to the second configuration information based on the fixed time interval corresponding to the first configuration information, so that the number of the tokens in the token bucket of each FGQ is recovered at a certain rate.

It can be seen that, in the traffic shaping scheduling method according to this embodiment, the traffic of each FQ corresponding to each service is limited based on the precondition that each service or each FQ of the SQ is respectively configured to the corresponding FGQ, so that the bandwidth traffic occupied by each service is limited, thus preventing the situation that other services of the subscriber or other subscribers are blocked due to the excessively large traffic of the single service of the subscriber.

In the traffic shaping scheduling method according to this embodiment, different services of a subscriber may be divided into different groups, so that services of large traffic do not affect other services of the subscriber; and the same service of different subscribers may be divided into one group to limit the traffic thereof, so that the total bandwidth of the service used by the different subscribers is always limited, thereby ensuring that the service does not block other services of other subscribers.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, or an optical disk.

FIG. 4 is a schematic structural view of a first embodiment of a traffic shaping scheduling apparatus according to the present invention. As shown in FIG. 4, specifically, the traffic shaping scheduling apparatus according to this embodiment includes a query module 11, a judgement module 12, and a scheduling module 13.

The query module 11 is adapted to obtain an SQ passing previous-level scheduling, query at least one FGQID corresponding to the SQID, in which each FGQID corresponds to one or more FQs of the SQ.

The judgement module 12 is adapted to judge whether the corresponding FQ satisfies a scheduling condition according to the number of currently remaining tokens in a token bucket corresponding to each FGQID.

The scheduling module 13 is adapted to schedule the FQ satisfying the scheduling condition and determined by the judgement module 12 out of the queue.

Specifically, in this embodiment, for the specific working processes of all the modules, reference may be made to the relevant content disclosed in the relevant embodiments of the traffic shaping scheduling method, and the details will not be described herein again.

It can be seen that, in the traffic shaping scheduling apparatus according to this embodiment, the traffic of each FGQ corresponding to each service is limited based on the precondition that each service or each FQ of the SQ is respectively configured to the corresponding FGQ, so that the bandwidth traffic occupied by each service is limited, thus preventing the situation that other services of the subscriber or other subscribers are blocked due to the excessively large traffic of the single service of the subscriber.

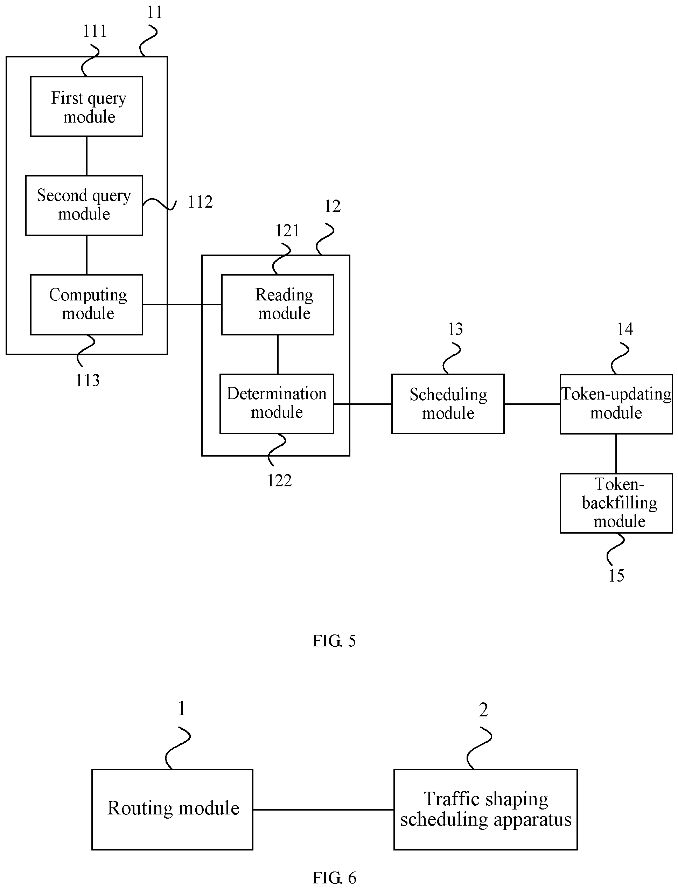

FIG. 5 is a schematic structural view of a second embodiment of a traffic shaping scheduling apparatus according to the present invention. As shown in FIG. 5, based on the technical solution of the described embodiment, the query module 11 in the traffic shaping scheduling apparatus according to this embodiment may further include a first query module 111, a second query module 112, and a computing module 113.

The first query module 111 is adapted to query a BASE_FGQID corresponding to an SQID passing previous-level scheduling according to a first correspondence list storing a mapping relationship between the SQID and the BASE_FGQID.

The second query module 112 is adapted to query a respective offset of the FQ of the SQ according to a second correspondence list corresponding to the SQID and storing a mapping relationship between the FQ and the offset.

The computing module 113 is adapted to compute an FGQID corresponding to each FQ according to the BASE_FGQID queried by the first query module 111 and the respective offsets of FQs queried by the second query module 112.

Further, the judgement module 12 in the traffic shaping scheduling apparatus according to this embodiment may further include a reading module 121 and a determination module 122.

The reading module 121 is adapted to read the number of the remaining tokens in the token bucket respectively corresponding to each FGQID queried by the query module 11.

The determination module 122 is adapted to determine that the FQ of the SQ corresponding to the FGQID satisfies the scheduling condition, if the number of the remaining tokens of the FGQID is greater than or equal to a preset threshold of the FGQ, and determine that the FQ of the SQ corresponding to the FGQID fails to satisfy the scheduling condition, if the tokens having the number of the FGQID is smaller than the preset threshold of the FGQ.

Further, based on the implementation solution, the traffic shaping scheduling apparatus according to this embodiment may further include a token-updating module 14 and a token-backfilling module 15.

Specifically, the token-updating module 14 is adapted to update the number of the tokens in the token bucket corresponding to the FGQID of the FQ passing the next-level scheduling according to scheduling result information fed back by the next-level scheduling, in which the scheduling result information indicates the FQs passing the next-level scheduling.

The token-backfilling module 15 is adapted to backfill the token bucket corresponding to the FGQID with the tokens having the number specified by the second configuration information at the rate specified by the first configuration information according to the first configuration information and the second configuration information corresponding to each FGQID.

Specifically, in this embodiment, for the specific working processes of all the modules, reference may be made to the relevant content disclosed in the relevant embodiments of the traffic shaping scheduling method, and the details will not be described herein again.

It can be seen that, in the traffic shaping scheduling apparatus according to this embodiment, the traffic of each FGQ corresponding to each service is limited based on the precondition that each service or each FQ of the SQ is respectively configured to the corresponding FGQ, so that the bandwidth traffic occupied by each service is limited, thus preventing the situation that other services of the subscriber or other subscribers are blocked due to the excessively large traffic of the single service of the subscriber.

In the traffic shaping scheduling apparatus according to this embodiment, different services of a subscriber may be divided into different groups, so that services of large traffic do not affect other services of the subscriber; and the same service of different subscribers may be divided into one group to limit the traffic thereof, so that the total bandwidth of the service used by the different subscribers is always limited, thereby ensuring that the service does not block other services of other subscribers.

FIG. 6 is a schematic structural view of a routing device according to an embodiment of the present invention. As shown in FIG. 6, the routing device according to this embodiment includes a routing module 1, as well as the traffic shaping scheduling apparatus 2 in the described embodiment, adapted to control the traffic of single or multiple services using the FQ corresponding to the service as the unit.

Specifically, in this embodiment, for the specific working processes of all the modules, reference may be made to the relevant content disclosed in the relevant embodiments of the traffic shaping scheduling method and the traffic shaping scheduling apparatus, and the details will not be described herein again.

It can be seen that, in the routing device according to this embodiment, the traffic of each FGQ corresponding to each service or each FQ is limited based on the precondition that each service or each FQ of the SQ is respectively configured to the corresponding FGQ, so that the bandwidth traffic occupied by each service is limited, thus preventing the situation that other services of the subscriber or other subscribers are blocked due to the excessively large traffic of the single service of the subscriber.

Finally, it should be noted that the above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not depart from the scope of the present invention.

## Claims

1. A traffic shaping scheduling method for controlling traffic entering a network in a certain period of time, comprising:
distributing to each subscriber a unique Subscriber Queue identifier, SQID, and making it correspond to a Subscriber Queue, SQ, wherein multiple Flow Queues, FQs, corresponding to multiple services of each SQ are separately configured to different Flow Group Queues, FGQs;
storing in a storage list a scheduling result of a previous level scheduling;
obtaining (100; 200), by a query module (11), a SQID of a SQ passing the previous-level scheduling, and capable of entering a present-level scheduling, said present-level scheduling comprising:
querying (201), by said query module (11) all FGQ, identifiers, FGQID, corresponding or relevant to the SQID, wherein each FGQID corresponds to one FGQ;
wherein a token bucket corresponding to each FGQID is for limiting data traffic allowed to enter the network corresponding to the FGQ, and
the number of currently remaining tokens in a token bucket of the FGQ represents the data traffic of the FGQ currently allowed to be transmitted;
reading (202) the number of the currently remaining tokens in the token bucket respectively corresponding to each queried FGQID; and
judging (101; 203), by a judgement module (12), if (2030) the number of the currently remaining tokens of the FGQID is greater than or equal to a preset threshold of the FGQID, determining (2031) that the FQ corresponding to the FGQID in the SQ satisfies a scheduling condition, and if the number of the currently remaining tokens of the FGQID is smaller than the preset threshold of the FGQID, determining (2032) that the FQ corresponding to the FGQID in the SQ fails to satisfy the scheduling condition, and
scheduling the FQ, satisfying the scheduling condition out of the queue.

2. The traffic shaping scheduling method according to claim 1, wherein the querying (201) different FGQIDs corresponding to the SQID comprises:
querying (2010) a BASE_FGQID corresponding to the SQ, according to a first correspondence list storing a mapping relationship between the SQID and the BASE_FGQID;
querying (2011) respective offsets of the FQs, requiring traffic shaping in the SQ, respective offsets of the FQs, requiring traffic shaping in the SQ, according to a second correspondence list corresponding to the SQID and storing a mapping relationship between an FQID and the offset; and
computing (2012) the FGQID corresponding to each FQ, according to the queried BASE FGQID and the respective offsets of FQs.

3. The traffic shaping scheduling method according to claim 1, further comprising:
regularly backfilling the token bucket corresponding to the FGQID with the tokens having the number specified by first configuration information based on a fixed time interval specified by the first configuration information according to the first configuration information and second configuration information of the FGQID.

4. A traffic shaping scheduling apparatus (2) for controlling traffic entering a network in a certain period of time, wherein a unique Subscriber Queue identifier, SQID, is distributed to each subscriber, and the SQID is made correspond to a Subscriber Queue, SQ, wherein multiple Flow Queues, FQs, corresponding to multiple services of each SQ are separately configured to different Flow Group Queues, FGQs, and a scheduling result of a previous level scheduling is stored in a storage list; the apparatus (2) comprising:
a query module (11), adapted to obtain a SQID of a SQ, passing the previous-level scheduling and capable of entering a present level scheduling, and the query module (11) is adapted to query all Flow Group Queue, FGQ, identifiers, FGQID, corresponding or relevant to the SQID for said present-level scheduling, wherein each FGQID corresponds to one FGQ, wherein a token bucket corresponding to each FGQID is for limiting data traffic allowed to enter the network corresponding to the FGQ, and the number of currently remaining tokens in a token bucket of the FGQ represents the data traffic of the FGQ currently allowed to be transmitted;
a judgement module (12), adapted to judge if the number of the currently remaining tokens of the FGQID is greater than or equal to a preset threshold of the FGQID, wherein the judgement module (12) further comprising:
a reading module (121), adapted to read the number of currently remaining tokens in the token bucket respectively corresponding to each queried FGQID; and
a determination module (122), adapted to determine that the FQ corresponding to the FGQID in the SQ satisfies the scheduling condition, if the number of the currently remaining tokens of the FGQID is greater than or equal to a preset threshold of the FGQID, and determine that the FQ corresponding to the FGQID in the SQ fails to satisfy the scheduling condition, if the number of the currently remaining tokens of the FGQID is smaller than the preset threshold of the FGQID ; and
a scheduling module (13), adapted to schedule the FQ, satisfying the scheduling condition determined by the judgement module (12) out of the queue.

5. The traffic shaping scheduling apparatus according to claim 4, wherein the query module (11) comprises:
a first query module (111), adapted to query a BASE_FGQID corresponding to the SQ according to a first correspondence list storing a mapping relationship between the SQID and the BASE_FGQID;
a second query module (112), adapted to query a respective offset of the FQ in the SQ according to a second correspondence list corresponding to the SQID and storing a mapping relationship between the FQ and the offset; and
a computing module (113), adapted to compute the FGQID corresponding to each FQ according to the BASE_FGQID queried by the first query module and the respective offset of each FQ, queried by the second query module (112).

6. The traffic shaping scheduling apparatus according to claim 4, further comprising:
a token-backfilling module (15), adapted to regularly backfill the token bucket corresponding to the FGQID with the tokens having the number specified by second configuration information based on a fixed time interval specified by first configuration information according to the first configuration information and the second configuration information of the FGQID.

7. A routing device, comprising a routing module (1), and further comprising the traffic shaping scheduling apparatus (2) according to any one of claims 4 to 6.

## Patentansprüche

1. Verkehrsformungsplanungsverfahren zum Steuern von Verkehr, der in ein Netz in einer speziellen Zeitspanne eintritt, wobei das Verfahren Folgendes umfasst:
Verteilen an jeden Teilnehmer eines eindeutigen Teilnehmerwarteschlangenbezeichners, SQID, und Bewirken, dass er einer Teilnehmerwarteschlange, SQ, entspricht, wobei mehrere Datenflusswarteschlangen, FQs, die mehreren Diensten jeder SQ entsprechen, getrennt in unterschiedliche Datenflussgruppenwarteschlangen, FGQs, konfiguriert sind;
Speichern in einer Speicherliste eines Planungsergebnisses einer Planung einer vorhergehenden Ebene;
Erhalten (100; 200) durch ein Abfragemodul (11) eines SQID einer SQ, die die Planung der vorhergehenden Ebene durchläuft und die imstande ist, in eine Planung der aktuellen Ebene einzutreten, wobei die Planung der aktuellen Ebene Folgendes umfasst:
Abfragen (201) durch das Abfragemodul (11) aller FGQ-Bezeichner, FGQID, die dem SQID entsprechen oder für ihn relevant sind, wobei jeder FGQID einer FGQ entspricht;
wobei ein "Token Bucket", der jedem FGQID entspricht, zum Begrenzen von Datenverkehr, der in das Netz gemäß der FGQ eintreten darf, dient und
die Anzahl aktuell verbleibender Token in einem "Token Bucket" der FGQ den Datenverkehr der FGQ repräsentiert, der aktuell übertragen werden darf;
Lesen (202) der Anzahl der aktuell verbleibenden Token in dem "Token Bucket", die jeweils jedem abgefragten FGQID entspricht; und
Beurteilen (101; 203) durch ein Beurteilungsmodul (12), ob (2030) die Anzahl der aktuell verbleibenden Token des FGQID größer als ein oder gleich einem voreingestellten Schwellenwert des FGQID ist, Bestimmen (2031), dass die FQ, die dem FGQID in der SQ entspricht, eine Planungsbedingung erfüllt, und falls die Anzahl der aktuell verbleibenden Token des FGQID kleiner ist als der voreingestellte Schwellenwert des FGQID, Bestimmen (2032), dass die FQ, die dem FGQID in der SQ entspricht, die Planungsbedingung nicht erfüllt, und
Planen der FQ, die die Planungsbedingung erfüllt, aus der Warteschlange.

2. Verkehrsfortnungsplanungsverfahren nach Anspruch 1, wobei das Abfragen (201) unterschiedlicher FGQIDs, die der SQID entsprechen, Folgendes umfasst:
Abfragen (2010) eines BASE_FGQID, der der SQ entspricht, gemäß einer ersten Zuordnungsliste, die eine Abbildungsbeziehung zwischen dem SQID und dem BASE_FGQID speichert;
Abfragen (2011) des jeweiligen Versatzes der FQs, die Verkehrsformung in der SQ erfordern, des jeweiligen Versatzes der FQs, die Verkehrsformung in der SQ erfordern, gemäß einer zweiten Zuordnungsliste, die dem SQID entspricht, und Speichern einer Abbildungsbeziehung zwischen einem FQID und dem Versatz; und
Berechnen (2012) des FGQID, der jeder FQ entspricht, gemäß der abgefragten BASE_FGQID und dem jeweiligen Versatz der FQs.

3. Verkehrsformungsplanungsverfahren nach Anspruch 1, das ferner Folgendes umfasst:
regelmäßiges Wiederauffüllen des "Token Bucket", der dem FGQID entspricht, mit den Token, die die Anzahl aufweisen, die durch erste Konfigurationsinformationen spezifiziert ist, basierend auf einem festen Zeitintervall, das durch die ersten Konfigurationsinformationen spezifiziert ist, gemäß den ersten Konfigurationsinformationen und zweiten Konfigurationsinformationen des FGQID.

4. Verkehrsformungsplanungsvorrichtung (2) zum Steuern von Verkehr, der in ein Netz in einer speziellen Zeitspanne eintritt, wobei ein eindeutiger Teilnehmerwarteschlangenbezeichner, SQID, an jeden Teilnehmer verteilt wird, und bewirkt wird, dass der SQID einer Teilnehmerwarteschlange, SQ, entspricht, wobei mehrere Datenflusswarteschlangen, FGQs, die mehreren Diensten jeder SQ entsprechen, getrennt in unterschiedliche Datenflussgruppenwarteschlangen, FGQs, konfiguriert sind und ein Planungsergebnis einer Planung einer vorhergehenden Ebene in einer Speicherliste gespeichert ist; wobei die Vorrichtung (2) Folgendes umfasst:
ein Abfragemodul (11), das ausgelegt ist, einen SQID einer SQ zu erhalten, die die Planung der vorhergehenden Ebene durchläuft und imstande ist, in eine Planung der aktuellen Ebene einzutreten, und wobei das Abfragemodul (11) ausgelegt ist, alle Datenflussgruppenwarteschlangen-Bezeichner, FGQ-Bezeichner, FGQID, die dem SQID entsprechen oder für ihn relevant sind, für die Planung der aktuellen Ebene abzufragen, wobei jeder FGQID einer FGQ entspricht, wobei ein "Token Bucket", der jedem FGQID entspricht, zum Begrenzen von Datenverkehr, der in das Netz gemäß der FGQ eintreten darf, dient und die Anzahl aktuell verbleibender Token in einem "Token Bucket" der FGQ den Datenverkehr der FGQ repräsentiert, der aktuell übertragen werden darf;
ein Beurteilungsmodul (12), das ausgelegt ist zu beurteilen, ob die Anzahl der aktuell verbleibenden Token des FGQID größer als ein oder gleich einem voreingestellten Schwellenwert des FGQID ist, wobei das Beurteilungsmodul (12) ferner Folgendes umfasst:
ein Lesemodul (121), das ausgelegt ist, die Anzahl aktuell verbleibender Token in dem "Token Bucket", die jeweils jedem abgefragten FGQID entsprechen, zu lesen; und
ein Bestimmungsmodul (122), das ausgelegt ist zu bestimmen, dass die FQ, die dem FGQID in der SQ entspricht, die Planungsbedingung erfüllt, falls die Anzahl der aktuell verbleibenden Token des FGQID größer als ein oder gleich einem voreingestellten Schwellenwert des FGQID ist, und zu bestimmen, dass die FQ, die dem FGQID in der SQ entspricht, die Planungsbedingung nicht erfüllt, falls die Anzahl der aktuell verbleibenden Token des FGQID kleiner ist als der voreingestellte Schwellenwert des FGQID; und
ein Planungsmodul (13), das ausgelegt ist, die FQ, die die Planungsbedingung erfüllt, die durch das Beurteilungsmodul (12) bestimmt ist, aus der Warteschlange zu planen.

5. Verkehrsformungsplanungsvorrichtung nach Anspruch 4, wobei das Abfragemodul (11) Folgendes umfasst:
ein erstes Abfragemodul (111), das ausgelegt ist, einen BASE_FGQID, der der SQ entspricht, gemäß einer ersten Zuordnungsliste, die eine Abbildungsbeziehung zwischen dem SQID und dem BASE_FGQID speichert, abzufragen;
ein zweites Abfragemodul (112), das ausgelegt ist, einen jeweiligen Versatz der FQ in der SQ gemäß einer zweiten Zuordnungsliste, die dem SQID entspricht, abzufragen und eine Abbildungsbeziehung zwischen der FQ und dem Versatz zu speichern; und
ein Berechnungsmodul (113), das ausgelegt ist, den FGQID, der jeder FQ entspricht, gemäß der durch das erste Abfragemodul abgefragten BASE_FGQID und dem jeweiligen durch das zweite Abfragemodul (112) abgefragten Versatz jeder FQ zu berechnen.

6. Verkehrsformungsplanungsvorrichtung nach Anspruch 4, die ferner Folgendes umfasst:
ein Token-Wiederauffüllmodul (15), das ausgelegt ist, den "Token Bucket", der dem FGQID entspricht, regelmäßig mit Token, die die Anzahl aufweisen, die durch zweite Konfigurationsinformationen spezifiziert ist, basierend auf einem festen Zeitintervall, das durch erste Konfigurationsinformationen spezifiziert ist, gemäß den ersten Konfigurationsinformationen und den zweiten Konfigurationsinformationen des FGQID wiederaufzufüllen.

7. Lenkungsvorrichtung, die ein Lenkungsmodul (1) umfasst und ferner die Verkehrsformungsplanungsvorrichtung (2) nach einem der Ansprüche 4 bis 6 umfasst.

## Revendications

1. Procédé de planification de lissage de trafic permettant de contrôler un trafic entrant dans un réseau dans une certaine période de temps, comprenant les étapes suivantes :
distribuer à chaque abonné un identifiant de file d'attente d'abonnés, SQID, unique et le faire correspondre à une file d'attente d'abonnés, SQ, plusieurs files d'attente de flux, FQ, correspondant à plusieurs services de chaque SQ étant configurées séparément selon différentes files d'attente de groupes de flux, FGQ ;
stocker dans une liste de stockage un résultat de planification d'une planification de niveau précédent;
obtenir (100 ; 200), par un module de requête (11), un SQID d'une SQ passant la planification de niveau précédent, et capable d'entrer dans une planification de niveau présent, ladite planification de niveau présent comprenant :
demander (201), par ledit module de requête (11) tous les identifiants FGQ, FGQID, correspondant ou s'appliquant au SQID, chaque FGQID correspondant à une FGQ ;
un seau à jetons correspondant à chaque FGQID étant destiné à limiter un trafic de données autorisé à entrer dans le réseau correspondant à la FGQ, et
le nombre de jetons restant couramment dans un seau à jetons de la FGQ représentant le trafic de données de la FGQ couramment autorisée à être transmise ;
lire (202) le nombre des jetons restant couramment dans le seau à jetons correspondant respectivement à chaque FGQID demandé ; et
juger (101 ; 203), par un module de jugement (12), si (2030) le nombre des jetons restant couramment du FGQID est supérieur ou égal à un seuil prédéfini du FGQID, déterminer (2031) que la FQ correspondant au FGQID dans la SQ satisfait une condition de planification, et si le nombre des jetons restant couramment du FGQID est inférieur au seuil prédéfini du FGQID, déterminer (2032) que la FQ correspondant au FGQID dans la SQ ne satisfait pas la condition de planification, et
planifier la FQ, satisfaisant la condition de planification hors de la file d'attente.

2. Procédé de planification de lissage de trafic selon la revendication 1, dans lequel l'étape consistant à demander (201) différents FGQID correspondant au SQID comprend :
demander (2010) un BASE_FGQID correspondant à la SQ, selon une première liste de correspondances stockant une relation de mappage entre le SQID et le BASE_FGQID;
demander (2011) des décalages respectifs des FQ, requérir un lissage de trafic dans la SQ, des décalages respectifs des FQ, requérir un lissage de trafic dans la SQ, selon une deuxième liste de correspondances correspondant au SQID et stocker une relation de mappage entre un FQID et le décalage ; et
calculer (2012) le FGQID correspondant à chaque FQ, selon le BASE_FGQID demandé et les décalages respectifs de FQ.

3. Procédé de planification de lissage de trafic selon la revendication 1, comprenant en outre :
combler régulièrement le seau à jetons correspondant au FGQID avec les jetons ayant le nombre spécifié par des premières informations de configuration sur la base d'un intervalle de temps fixe spécifié par les premières informations de configuration selon les premières informations de configuration et les deuxièmes informations de configuration du FGQID.

4. Appareil de planification de lissage de trafic (2) permettant de contrôler un trafic entrant dans un réseau dans une certaine période de temps, un identifiant de file d'attente d'abonnés, SQID, unique étant distribué à chaque abonné, et le SQID étant fait pour correspondre à une file d'attente d'abonnés, SQ, plusieurs files d'attente de flux, FQ, correspondant à plusieurs services de chaque SQ étant configurées séparément selon différentes files d'attente de groupes de flux, FGQ, et un résultat de planification d'une planification de niveau précédent étant stocké dans une liste de stockage ; l'appareil (2) comprenant :
un module de requête (11), conçu pour obtenir un SQID d'une SQ, passant la planification de niveau précédent et capable d'entrer dans une planification de niveau présent, et le module de requête (11) est conçu pour demander tous les identifiants de files d'attente de groupes de flux, FGQ, FGQID, correspondant ou s'appliquant au SQID pour ladite planification de niveau présent, chaque FGQID correspondant à une FGQ, un seau à jetons correspondant à chaque FGQID étant destiné à limiter un trafic de données autorisé à entrer dans le réseau correspondant à la FGQ, et le nombre de jetons restant couramment dans un seau à jetons du FGQ représentant le trafic de données de la FGQ couramment autorisée à être transmise ;
un module de jugement (12), conçu pour juger si le nombre des jetons restant couramment du FGQID est supérieur ou égal à un seuil prédéfini du FGQID, le module de jugement (12) comprenant en outre :
un module de lecture (121), conçu pour lire le nombre de jetons restant couramment dans le seau à jetons correspondant respectivement à chaque FGQID demandé ; et
un module de détermination (122), conçu pour déterminer que la FQ correspondant au FGQID dans la SQ satisfait la condition de planification, si le nombre des jetons restant couramment du FGQID est supérieur ou égal à un seuil prédéfini du FGQID, et déterminer que la FQ correspondant au FGQID dans la SQ ne satisfait pas la condition de planification, si le nombre des jetons restant couramment du FGQID est inférieur au seuil prédéfini du FGQID ; et
un module de planification (13), conçu pour planifier la FQ, satisfaisant la condition de planification déterminée par le module de jugement (12) hors de la file d'attente.

5. Appareil de planification de lissage de trafic selon la revendication 4, dans lequel le module de requête (11) comprend :
un premier module de requête (111), conçu pour demander un BASE_FGQID correspondant à la SQ selon une première liste de correspondances stockant une relation de mappage entre le SQID et le BASE_FGQID;
un deuxième module de requête (112), conçu pour demander un décalage respectif de la FQ dans la SQ selon une deuxième liste de correspondances correspondant au SQID et stockant une relation de mappage entre la FQ et le décalage ; et
un module de calcul (113), conçu pour calculer le FGQID correspondant à chaque FQ selon le BASE_FGQID demandé par le premier module de requête et le décalage respectif de chaque FQ, demandé par le deuxième module de requête (112).

6. Appareil de planification de lissage de trafic selon la revendication 4, comprenant en outre :
un module de comblement de jetons (15), conçu pour combler régulièrement le seau à jetons correspondant au FGQID avec les jetons ayant le nombre spécifié par des deuxièmes informations de configuration sur la base d'un intervalle de temps fixe spécifié par des premières informations de configuration selon les premières informations de configuration et les deuxièmes informations de configuration du FGQID.

7. Dispositif de routage, comprenant un module de routage (1), et comprenant en outre l'appareil de planification de lissage de trafic (2) selon l'une quelconque des revendications 4 à 6.
